# EUROPÄISCHE PATENTSCHRIFT

(11) **EP 2 431 262 B1**
(45) Veröffentlichungstag und Bekanntmachung des Hinweises auf die Patenterteilung: **17.04.2013**
(21) Anmeldenummer: 11007518.1
(22) Anmeldetag: 14.09.2011
(51) Int. Cl.: B62H 1/02, B62H 1/06

(54) **Klappbarer Zweiradständer zur Befestigung an Zweirädern**
Collapsible bicycle stand for fixing to bicycles
Support de deux roues pliant pour la fixation sur des deux-roues

(30) Priorität: 17.09.2010 DE 102010045681
(43) Veröffentlichungstag der Anmeldung: 21.03.2012
(73) Patentinhaber: Color Metal GmbH, 79423 Heitersheim (DE)
(72) Erfinder: Möllinger, Martin, 79219 Staufen (DE)
(74) Vertreter: Miller, Andreas

(56) Entgegenhaltungen:
- DE-B4-102006 001 105
- DE-C- 828 959
- US-A- 2 702 197

## Beschreibung

Die Erfindung betrifft einen Zweiradständer, gemäß dem Oberbegriff des Anspruchs 1.

Am Fahrrad selbst angebrachte Ständer, die diesem als Stütze dienen um zu verhindern, dass es im freien Stand umfällt, sind bekannt. Die meisten dieser Stützen sind jedoch nur geeignet, das Umfallen auf ebener Fläche zu verhindern. Aus der DE 828 959 und aus der US 2 702 197 A sind Ständer bekannt, die aus einem Außenrohr und einem verschiebbarem Innenrohr bestehen und die eine gewisse Anpassung an unebenen Untergrund erlauben. Während DE 828 959 noch eine aktive Einstellung der notwendigen Länge durch den Anwender erfordert, sieht US 2 702 197 A die Arretierung durch eine von einem Magneten in einer Einkerbung am Innenrohr gehaltene Kugel vor, die in einer bestimmten Stellung ein weiteres Einschieben des Außenrohrs über das Innenrohr verhindert.

Eine Weiterentwicklung dieser Ständer stellt die gattungsbildende DE 10 2006 001 105 B4 dar, die als nächstliegender Stand der Technik angesehen wird. Der dort beschriebene Ständer passt sich selbsttätig den Gegebenheiten des Untergrundes unter Berücksichtigung des optimalen Neigungswinkels des Fahrrades an. Nach dem Ausklappen des Ständers mit seiner maximalen Auszugslänge wird das Fahrrad in Richtung gegen den Ständer geneigt. Durch das Neigen des Rades wird der Ständer in sich selbst eingeschoben bis der optimale Neigungswinkel erreicht ist, da die Sperrvorrichtung bei diesem Neigungswinkel blockiert. Das wird dadurch erreicht, dass der Fahrradständer aus einem Außenrohr mit einschiebbarem, mit zahlreichen linear unter einander angeordneten Kerben versehenem Innenrohr besteht, welches durch eine Druckfeder aus dem Außenrohr herausgedrückt wird und so mit dem Boden in Berührung kommt. Die für die Blockierung in der gewünschten Stellung vorgesehene Sperreinrichtung besteht aus einem außen auf dem Außenrohr angebrachten Kugelkanal und einer darin befindlichen Kugel, die beim richtigen Neigungswinkel sich aus dem Kugelkanal bewegt und durch die im Außenrohr befindliche Öffnung in eine der am Innenrohr vorgesehenen Kerben derart fällt, dass sie nur teilweise in dieser Kerbe verschwindet und mit dem vorstehenden Teil ein weiteres Einschieben des Innenrohrs verhindert. Die Blockierung durch Einrollen der Kugel in die dem Neigungswinkel des Fahrrads entsprechende Kerbe wird durch einen bestimmten Ausgleitwinkel der Kerbe erreicht. Nachteilig ist, dass bei diesem System die Kugel soweit aus der Kerbe des Innenrohrs heraussteht, dass sie noch beträchtliche Kräfte auf den Kugelkanal bzw. die Öffnung der Außenrohrwand ausübt, so dass diese starken Belastungen ausgesetzt ist, was eine aufwendige Konstruktion und stabile Ausformung des Kugelkanals und der Außenwandöffnung erfordert, die zudem schlecht gegen Witterungseinflüsse abgeschirmt werden können, was einen erheblichen Produktions- und Kostenmehraufwand nach sich zieht.

Diese Nachteile vermeidet die Erfindung dadurch, dass das Innenrohr als Teleskopstange mit einer durchgehenden Wellenkontur ausgebildet ist und auf dem Außenrohr ein Gehäuse, das Kugelkanalstück, befestigt ist, in dem sich ein schalenförmiger, halbrunder Kugelkanal, ein Kugelrad und eine Kugel befindet, wobei sich die Wellenkontur auf der Seite des Kugelkanalstücks erstreckt. In der Wand des Außenrohrs ist im Bereich des Kugelkanalstückes eine abgestufte Öffnung eingelassen, durch die die abgerundeten Zähne des Kugelrades in die Lücken des Wellenprofils der Teleskopstange greifen können. Die durchgehende Wellenkontur der Teleskopstange ist so mit dem Kugelrad formtechnisch verzahnt. Die Kontur des Kugelrades ist dabei so ausgearbeitet, dass es an der Wellenkontur bzw. -profil der Teleskopstange wie ein Zahnrad funktioniert und im Kugelkanal das Einrollen der Kugel in eine abgerundeten Zahnlücke des Kugelrads ermöglicht. Durch Hineindrücken der Teleskopstange wird bei Erreichen eines bestimmten Neigungswinkels, in der Regel 7° in Richtung der Teleskopstange, die Kugel bei entsprechender Drehung des Kugelrads in eine der abgerundeten Zahnlücken des Kugelrades transportiert. Beim Verrastvorgang wird die Kugel durch das Kugelrad stumpf auf die abgestufte Wandöffnung des Außenrohrs gedrückt, wodurch ein Weiterdrehen des Kugelrades verhindert und durch Einrasten eines Zahnes des Kugelrades in eine Vertiefung des Wellenprofils der Teleskopstange deren weiteres Hineinschieben in das Außenrohr blockiert wird.

Da die Verrastung nicht mehr von der Winkellage der Teleskopstange abhängig ist, kann die Ausführung der Ständergeometrie insoweit variabler gestaltet werden als der Fahrradständer flacher oder steiler ausfallen kann. Bei der Verrastung gem. DE 10 2006 001 105 B4 muss die Kugel hingegen in eine Kugeltasche der Raststange (hier Teleskopstange) einrollen, und zwar soweit, dass die Kugel noch etwas über ihren Schwerpunkt in die Tasche der Raststange eintaucht, damit sie nicht wieder zurückrollen kann. Somit ist die Tiefe der Rasttaschen wesentlich von der Winkellage der Raststange beeinflusst.

Bei der erfindungsgemäßen Ausgestaltung hat die Kugel dagegen keinen Kontakt mehr mit der Teleskopstange, die ja keine Raststange mehr im eigentlichen Sinne ist. Der komplette Vorgang der Verrastung und Entrastung findet vielmehr ausschließlich zwischen Kugelkanal, Kugelrad, Kugel und Außenrohr statt. Die Winkellage der Teleskopstange (und somit des gesamten Ständers) ist nicht mehr wichtig. Maßgeblich für die Funktion ist nur noch die Winkellage des Kugelkanalstücks und des darin befindlichen Kugelkanals.

Dadurch, dass die Kugel mit der Teleskopstange nicht mehr in Berührung kommt und keinen Außenkontakt mehr hat, ist sie auch von vornherein wesentlich besser vor Verschmutzung geschützt, ein Schutz der noch zusätzlich durch Dichtlippen aus Elastomer am Ende des Außenrohrs und zwischen den Öffnungen des Außenrohrs und des Kugelkanalstückes verstärkt wird.

Beim erfindungsgemäßen Fahrradständer blockiert die Kugel in der abgestuften Wandöffnung zwischen Außenrohr und Kugelrad. Hierdurch werden die Druckkräfte stumpf auf die Materialien übertragen und verteilt. Hauptsächlich werden die Kräfte von der abgestuften Wandöffnung, vom Kugelrad bzw. der im Kugelkanalstück gelagerten Achse des Kugelrades aufgenommen. Die Kräfte wirken nun nicht mehr punktuell, sondern werden großflächig verteilt. Nach Einrollen der Kugel in die Zahnlücke des Kugelrads wird durch ein geringfügiges Weiterdrehen des Kugelrades ein ungewolltes Zurückrollen der Kugel in den Kugelkanal im Kugelkanalstück verhindert

Eine Entrastung ist jederzeit und in jeder Lage möglich, da die innere Geometrie des Kugelkanalstücks durch den schalenförmigen, halbrunden Kugelkanal so geformt ist, dass die Kugel das Zurückdrehen des Kugelrades und damit das Herausdrücken der Teleskopstange in keinem Fall blockiert, da sie in den Kugelkanal zurückfallen kann. Damit wird das Herausdrücken der Teleskopstange durch die Druckfeder (insbesondere beim Einklappen des Ständers) ermöglicht, indem durch das Zurückdrehen des Kugelrads die Kugel wieder in den Kugelkanal zurückgeführt wird. Dies ist in jeder Lage des Ständers möglich.

Die Kugel wurde auf einen Durchmesser von vorzugsweise 4 mm festgelegt, um ein kleines Rastmaß, vorzugsweise 6,5 mm, und eine kleinere Baugröße des Funktionsteils, dem Kugelkanalstück zu ermöglichen. Das kleinere Rastmaß ergibt sich aus dem konstruktionsbedingten geringen Umfang des Kugelrades und aus dem geringeren Abstand zwischen den Zahnlücken des Kugelrades und des Wellenprofils der Teleskopstange. Ein weiterer Vorteil ist, dass sich hierdurch eine feinere Abstufung der Rastungen mit bis zu ca. 10 Raststufen ergibt.

Die Funktionslänge des Fahrradständers zum Ausgleich von Erhebungen und Vertiefungen des Untergrundes, also gemessen jeweils nach oben und unten beträgt vorzugsweise 30 mm +/-20%, so dass die Länge des Wellenprofils sich insgesamt 60 mm beläuft.

Sämtliche Bauteile sind weitgehend schmutz- und spritzwasserdicht ausgeführt.

Die Teleskopstange kann einfach und günstig, vorzugsweise als Kunststoffspritzgussteil einschließlich breitem Ständerfuß aus einem Stück hergestellt werden.

Zusätzlich am unteren Ende des Außenrohrs angebrachte Dichtlippen ermöglichen Schmutz-und Spritzwasserdichtheit.

Ein zusätzlicher Endanschlag für die Teleskopstange wird nicht mehr benötigt, denn ein Zahn des Kugelrads blockiert stets die Teleskopstange durch Einrasten in eine Zahnlücke des Wellenprofils, sodass schon hierdurch ein Herausschieben der Teleskopstange durch die Druckfeder verhindert wird. Auch werden die beim Abstellen des Fahrrads auftretenden Kräfte großflächig auf die Bauteile, nämlich abgestufte Wandöffnung des Außenrohrs, Kugelrad und - kanalstück verteilt, so dass aufgrund der geringeren Belastung der Einzelteile zu deren Herstellung einfache, kostengünstig zu verarbeitende und zu bearbeitende Materialien, vorzugsweise Aluminium für das Außenrohr und Kunststoff (Spritzgussteile) für Teleskopstange, Kugelkanalstück und -rad, verwendet werden können. Diese können auch einfach und schnell montiert und bei Notwendigkeit ebenso gewartet und ersetzt werden.

Da das Kugelkanalstück, das gleichzeitig zur Kugelführung und zur Lagerung des Kugelrades dient, mit einer zeichnerisch nicht darstellbaren Dichtlippe zwischen dem Rand der abgestuften Wandöffnung und dem deckungsgleichen Rand der Öffnung des Kugelkanalstück zum Außenrohr versehen ist, ist dieses vor Schmutz und Feuchtigkeit geschützt.

Da die durch die Verrastung auftretenden Kräfte großflächig aufgenommen werden, wird eine kleine Baugröße des Kugelkanalstücks und eine freie Materialauswahl ermöglicht, da (außer Schmutz- und Spritzwasserdichtheit) keine besonderen Anforderungen, insbesondere keine belastenden, an das Kugelkanalstück gestellt werden.

Daher wird eine sehr einfache und günstige Herstellung des Kugelkanalstücks vorzugsweise als Kunststoffspritzgussteil ermöglicht. Es bestehen daher auch keine Einschränkungen für Formgebung und Design des Kugelkanalstücks.

Nachfolgend wird die Funktion und technische Besonderheit der Erfindung anhand eines Ausführungsbeispiels, das in den Zeichnungen 1 bis 5 dargestellt ist, erläutert.

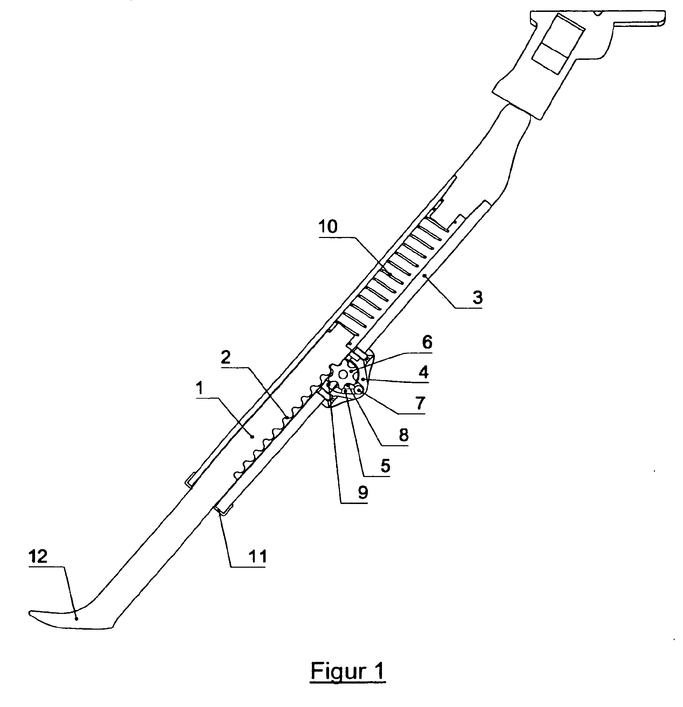

Die Figur 1 zeigt im Längsschnitt den erfindungsgemäßen Fahrradständer in seiner Gesamtheit mit allen Funktionsteilen, ausgeklappt bei etwa senkrecht stehendem Fahrrad. Die Teleskopstange(1) ist voll ausgefahren.

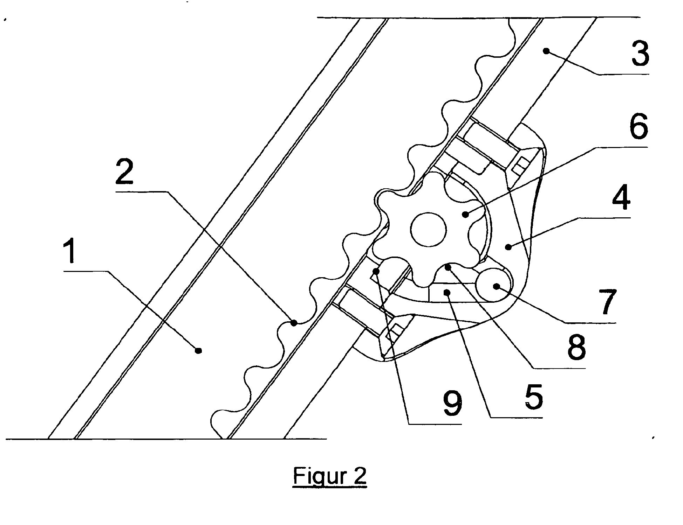

Das Fahrrad wird dann zur Seite des Fahrradständers hin geneigt, wodurch die Teleskopstange (1) in das Außenrohr (3) eingeschoben wird. Bei einer Radneigung von ~4° befindet sich das Kugelkanalstück (4) mit der Kugel (7) in der Horizontalen (Figur 2, Detailansicht).

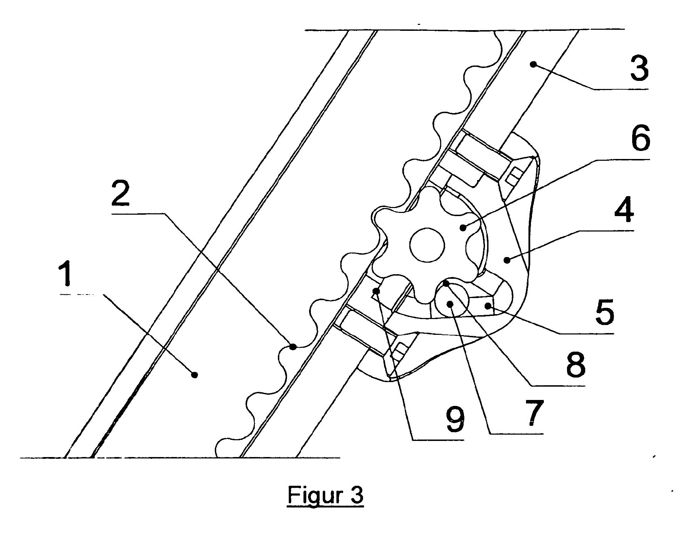

Figur 3 zeigt ebenfalls in Detailansicht, dass bei ~7° Fahrradneigung die Kugel (7) bereits der Neigung folgend in Richtung Außenrohr (3) gerollt ist und in die nächste Zahnlücke (8) des Kugelrades (6) fällt und dadurch zur Wandung des Außenrohrs (3) geführt wird .

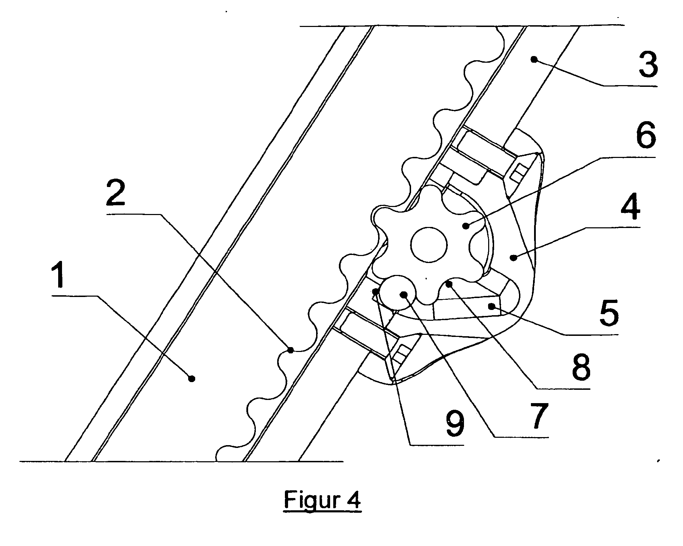

Die Kugel (7) wird von dem sich weiterdrehenden Kugelrad (6) mitgenommen bis bei ~8° Fahrradneigung die Kugel (7) auf die abgestufte Wandöffnung (9), des Außenrohrs (3) drückt und somit ein weiteres Drehen des Kugelrades (6) und dementsprechend ein weiteres Hineinschieben der Teleskopstange (1) verhindert wird, da gleichzeitig ein abgerundeter Zahn des Kugelrades (6) in eine abgerundete Zahnlücke des Wellenprofils (2) greift. Bei einer Neigung von ca. 8° wird die stabilste Lage des Fahrrades erreicht (Figur 4). Der Verrastvorgang ist beendet und das Fahrrad steht sicher im freien Stand.

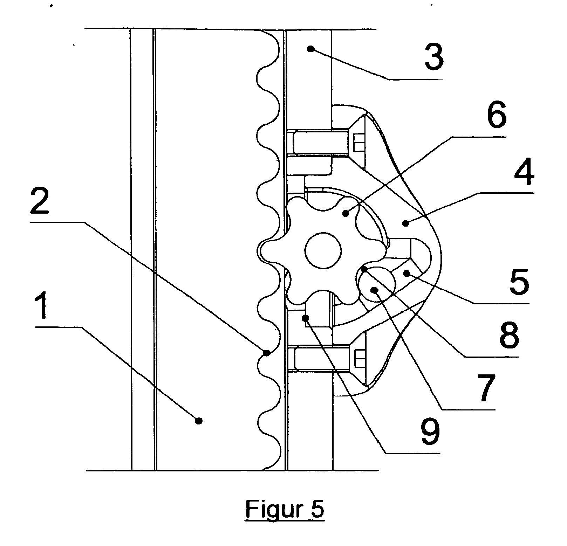

Wie in Figur 5 dargestellt geht der Entrastvorgang so vor sich:
Beim Wiederaufrichten des Fahrrades und/oder Zurückklappen des Radständers wird die Teleskopstange (1) durch die Kraft der Druckfeder (10) herausgefahren. Sobald die Teleskopstange (1) herausfährt, wird durch die dann wieder freigegebene Drehbewegung des Kugelrads (6) der Druck von der Kugel (7) genommen. Diese wird dann durch die Drehbewegung des Kugelrads (6) in einer Zahnlücke (8) des Kugelrads (6) in den Kugelkanal (5) des Kugelkanalstücks (4) transportiert und kann sanft und sicher in die Ausgangsposition im Kugelkanalstück (4) zurückrollen.

Dies ist in jeder Ständerstellung möglich.

### Legende

- (1): Teleskopstange
- (2): Wellenprofil
- (3): Außenrohr
- (4): Kugelkanalstück
- (5): Kugelkanal
- (6): Kugelrad
- (7): Kugel
- (8): Zahnlücke
- (9): abgestufte Wandöffnung
- (10): Druckfeder
- (11): Dichtlippe
- (12): Ständerfuß

## Patentansprüche

1. Klappbarer Zweiradständer zur Befestigung an Zweirädern, bestehend aus einem Außenrohr (3) mit einer gleitfähigen gegen die Federkraft einer Druckfeder (10) einschiebbaren, mit einem Ständerfuß (12) versehenen Teleskopstange (1), die durch die Druckfeder (10) aus dem Außenrohr (3) herausgedrückt werden kann, **dadurch gekennzeichnet, dass** eine Sperrwirkung gegen das Hineinschieben dadurch erzielt wird, dass die Teleskoopstange (1) mit einem Wellenprofil (2) ausgebildet ist und eine in einem auf dem Außenrohr (3) aufgebrachten Kugelkanalstück (4) befindliche Kugel (7) in eine Zahnlücke (8) des in das Kugelkanalstück (4) eingefügten Kugelrads (6) durch einen schalenförmigen, halbrunden Kugelkanal (5) zum Außenrohr (3) hin transportiert wird, dort gegen die abgestufte Wandöffnung (9) des Außenrohrs (3) drückt, dadurch ein Weiterdrehen des Kugelrads (6) durch Eingreifen eines abgerundeten Zahnes des Kugelrades (6) in eine abgerundete Zahnlücke des Wellenprofils (2) der Teleskopstange (1) verhindert und so ein weiteres Einschieben der Teleskopstange (1) in das Außenrohr (3) blockiert.

2. Klappbarer Zweiradständer nach Anspruch 1, **dadurch gekennzeichnet, dass** sich je nach Beschaffenheit des Untergrundes die notwendige Länge des Zweiradständers selbsttätig bedingt durch den Neigungswinkel des Zweirades und die schalenförmige, halbrunde Gestaltung des Kugelkanals (5) im Kugelkanalstück (4) dadurch einstellt, dass bei näherungsweise 7° Zweiradneigung die Kugel (7) in eine abgerundete Zahnlücke (8) des Kugelrades (6) einrollen kann.

3. Klappbarer Zweiradständer nach den Ansprüchen 1 und 2, **dadurch gekennzeichnet, dass** der Durchmesser der Kugel (7) 4 mm+/- 20%, das Rastmaß des Wellenprofils (2) 6,5 mm +/- 20%, und die Funktionslänge des Zweiradständers 30 mm +/- 20% beträgt.

4. Klappbarer Zweiradständer nach den Ansprüchen 1 bis 3, **dadurch gekennzeichnet, dass** die Teleskopstange (1) und der Ständerfuß (12) in einem Stück als Kunststoffspritzgussteil hergestellt werden.

5. Klappbarer Zweiradständer nach den Ansprüchen 1 bis 4, **dadurch gekennzeichnet, dass** das Kugelkanalstück (4) wie auch das Kugelrad (6) jeweils in einem Stück als Kunststoffspritzgussteil gefertigt werden und das Kugelkanalstück (4) bereits mit einer umlaufenden Dichtlippe aus Elastomer zwischen dem Rand der abgestuften Wandöffnung (9) und dem deckungsgleichen Rand der Öffnung des Kugelkanalstück (4) zum Außenrohr (3) zur Gewährleistung von Schmutz- und Spritzwasserdichtigkeit versehen wird.

## Claims

1. Hinged two-wheeler stand to be affixed to two-wheelers consisting of an outer tube (3) with a sliding telescopic bar (1) which is retractable against the spring force of a compression spring (10) and is provided with a stand foot (12), and which can be pressed out of the outer tube (3) by the compression spring (10) **characterised in that** a barrier effect against pushing in is achieved by the fact that the telescopic bar (1) is provided with a convolution shape (2) and that a ball (7) which is located in a ball duct unit (4) affixed on the outer tube (3) and which fits into the tooth space (8) of the ball wheel (6) of the ball duct unit (4) and which is transported through a shell-shaped semi-circular ball channel (5) towards the outer tube (3), where the ball (7) presses against the stepped wall opening (9) of the outer tube (3), which prevents a further rotation of the ball wheel (6) by engaging a rounded tooth of the ball wheel (6) in a rounded tooth gap of the convolution shape (2) of the telescopic bar (1), thus blocking a further insertion of the telescopic bar (1) into the outer tube (3).

2. Hinged two-wheeler stand according to claim 1 **characterised in that** depending on the nature of the surface the necessary length of the two-wheeler stand is set automatically by the angle of inclination of the two-wheeler and the shell-shaped semi-circular design of the ball channel (5) in the ball duct unit (4) due to the fact that at an inclination of the two-wheeler of approximately 7 degrees the ball (7) can roll into a rounded tooth space (8) of the ball wheel (6).

3. Hinged two-wheeler stand according to claims 1 and 2 **characterised in that** the diameter of the ball (7) is 4 mm +/- 20 per cent, the pitch dimension of the convolution shape (2) is 6.5 mm +/- 20 per cent, and the functional length of the two-wheeler stands comes up to 30 mm +/- 20 per cent.

4. Hinged two-wheeler stand according to claims 1 through 3 **characterised in that** the telescopic bar (1) and the stand foot (12) is manufactured in one piece as a plastic injection-moulded part.

5. Hinged two-wheeler stand according to claims 1 through 4 **characterised in that** the ball duct unit (4) as well as the ball wheel (6) are manufactured in one piece as a plastic injection-moulded part and the ball duct unit (4) is provided with a circulating sealing lip made of elastomer between the edge of the stepped wall opening (9) and the congruent edge of the opening of the ball duct unit (4) to the outer tube (3) to ensure tightness to dirt and splash water.

## Revendications

1. Béquille pour bicycle pliante à fixer au bicycle et composée d'un tube extérieur (3) équipé d'une barre télescopique (1) coulissable refoulant la force de ressort d'un ressort à compression (10) et munie d'un pied de béquille (12) ; cette barre télescopique peut être pressée par le ressort de compression (10) en dehors du tube extérieur (3) ; cette béquille est **caractérisée par le fait que** l'on atteint ainsi un effet de blocage contre l'enfoncement du fait que la barre télescopique (1) présente un profilé ondulé et qu'une bille (7) se trouvant dans un des éléments de canal à billes (4) monté sur le tube extérieur (3) est transportée vers le tube extérieur (3) dans un entredent (8) de la roue à billes (6) intégrée dans l'élément de canal à billes (4) par un canal à billes (5) semi-circulaire en forme de cuvette ; de là, elle presse contre l'ouverture étagée de paroi (9) du tube extérieur (3), empêchant ainsi une rotation ultérieure de la roue à billes (6) en engrenant une dent arrondie de la roue à billes (6) dans un entredent arrondi du profilé ondulé (2) de la barre télescopique (1) et bloquant ainsi un nouvel enfoncement de la barre télescopique (1) dans le tube extérieur (3).

2. Béquille pour bicycle pliante selon droit 1, **caractérisée par le fait que**, selon la nature du sol, la longueur nécessaire de béquille pour bicycle se règle automatiquement en fonction de l'angle d'inclinaison du bicycle et de la forme arrondie et en cuvette du canal à billes (5) dans l'élément de canal à billes (4), de telle manière que lors d'une inclinaison de bicycle d'environ 7°, la bille (7) peut rouler dans un entredent arrondi (8) de la roue à billes (6).

3. Béquille pour bicycle pliante selon les droits 1 et 2, **caractérisée par le fait que** le diamètre de la bille (7) est de 4 mm +/- 20%, la mesure d'arrêt du profilé ondulé (2) est de 6,5 mm +/- 20% et que la longueur de fonction de la béquille pour bicycle est de 30 mm +/- 20%.

4. Béquille pour bicycle pliante selon les droits 1 à 3, **caractérisée par le fait que** la barre télescopique (1) et le pied de béquille (12) sont fabriqués d'une seule pièce comme pièce moulée par injection en matière plastique.

5. Béquille pour bicycle pliante selon les droits 1 à 4, **caractérisée par le fait que** l'élément de canal à billes (4) de même que la roue à billes (6) sont fabriqués respectivement d'une seule pièce comme pièce moulée par injection en matière plastique et que l'élément de canal à billes (4) est déjà équipé sur tout le pourtour d'une lèvre d'étanchéité en élastomère posée entre la bordure de l'ouverture étagée de paroi (9) et la bordure coïncidante de l'ouverture de l'élément de canal à billes (4) vers le tube extérieur (3) en vue de garantir l'étanchéité contre les saletés et l'eau d'injection.
